# EUROPEAN PATENT APPLICATION

(11) **EP 3 503 324 A1**
(43) Date of publication of application: **26.06.2019**
(21) Application number: 17781152.8
(22) Date of filing: 09.08.2017
(51) Int. Cl.: H02G 3/14

(54) **COVER AND FRAME ASSEMBLY FOR A HOUSING AND SOCKET BASE PROVIDED WITH THIS ASSEMBLY**

(30) Priority: 16.08.2016 ES 201631099
(71) Applicant: Simon, S.A.U., 08013 Barcelona (ES)
(72) Inventor: RIQUÉ REBULL, Adriá, 08013 Barcelona (ES); PLAJA MIRÓ, Salvi, 08013 Barcelona (ES); BATISTE MAYAS, Clara, 08013 Barcelona (ES)
(74) Representative: Balder IP Law, S.L.
(86) International application number: PCT/ES2017/070575
(87) International publication number: WO 2018/033655

(57) **Abstract**

Cover (1) and frame (2) assembly for a housing (V), the cover (1) and the frame (2) being hinged by a hinge (A), the hinge (A) being composed of a protrusion (3) and a cavity (4) with an envelope complementary to the protrusion (3), the protrusion (3) being arranged in the cover (1) and the cavity (4) in the frame (2), or rather the cavity (4) being arranged in the cover (1) and the protrusion (3) in the frame, the axis of the protrusion (3) or of the cavity (4) being perpendicular to the cover (1) such that the protrusion (3) can rotate (R) with respect to the cavity (4) in a direction that is perpendicular to the cover (1), wherein either the protrusion (3) or part of the envelope of the cavity (4) is made of a magnetic material, the other being made of a magnetic or ferromagnetic material such that the hinge is disassembled when pulling the cover (1) in the direction perpendicular to the surface of the cover (1).

## Description

### Field of the invention

The invention relates to a cover and frame assembly for a housing with great simplicity, aesthetic quality, which does not require a full removal, and also which opening mechanism guarantees a very long service life.

### Background of the invention

Socket covers are known, and in particular those to cover the receiving receptacle for the male plug, which is provided with prongs.

Some sockets are used often and are not seen, such as the refrigerator or television sockets. Others are visible and are always or almost always used, such as sockets for dining room lamps.

On the other hand, others are visible and are used sporadically and for short periods of time, such as the bathroom socket, which is used for a dryer or a razor.

These sockets are more likely to accumulate dust inside.

To mitigate this drawback, it is customary to use covers, consisting of a simple cover concealing the access to the socket outlet. These covers may be fully removable or be hinged.

An example of the former is described in WO15128535, which especially emphasizes in providing a flush cover, especially for aesthetic reasons. Although these known covers fulfill their purpose, in practice they are inconvenient to use since they need to be fully removed whenever an electric appliance is to be connected. This complete withdrawal involves leaving the covers somewhere nearby, not always available, and it is common that they end up lost.

Examples of the latter are those shown in US9276346, US2004123997.

The first one discloses a hinged cover for outdoor use, which optionally can be supplied as a separate frame and cover assembly and which can be coupled, with sealing means, to the front of a socket.

The second is a hinged cover specially designed for outdoor use.

These covers fulfill their purpose, but they are too bulky and complex to operate as a simple cover in household sockets. In particular, these are solid hinges, which involve complex shapes and which also show a poor aesthetic, since they are conceived for outdoor use.

Constituting another form of hinge, DE29606983U1 discloses a cover and frame assembly for a housing, the cover and the frame being hinged by a hinge, the hinge being composed of a protrusion and a cavity with an envelope complementary to the protrusion, the protrusion being arranged in the cover and the cavity in the frame, or rather the cavity being arranged in the cover and the protrusion in the frame, the axis of the protrusion or the cavity being perpendicular to the cover such that the protrusion can rotate with respect to the cavity in a direction which is perpendicular to the cover.

US7214898, EP1772934, US2005181675 or DE4423075 disclose covers intended to conceal switches or sockets, the fastening of which is based on magnetic parts. These are covers meant to be fully removed.

US7977572 B1 discloses a cover and frame assembly for outdoor sockets, the cover and the frame being hinged by a hinge composed of a pin and a cylindrical cavity complementary to the pin, the pin being integral with the cover and the cavity being arranged in the frame, the axis of the pin being perpendicular to the cover such that is rotatable with respect to the cavity in a direction which is perpendicular to the cover. It is an assembly intended for outdoors provided with a complex mechanism including springs in which, in addition to the rotational movement between pin and cavity, the pin can be moved according to the pin's axial direction, to make a fit when the cover faces the frame in the closing position. Therefore, in order to be able to perform the rotational movement, it is first necessary to pull the cover and hence to move it axially. On the other hand, the pin has a considerable depth, to provide robustness to the assembly. If inadvertently, a force not compatible with the permitted movements of the cover, such as a force parallel to the pin axis but on an axis remote from the pin, such as at a lower edge of the cover, is exerted on the cap, the pin could be broken. That is, in order to avoid possible breakages of this assembly, the user must know in advance how to properly open the cover.

### Description of the invention

In order to overcome the shortcomings of the state of the art, the present invention proposes a cover and frame assembly for a housing, the cover and the frame being hinged by a hinge, the hinge being composed of a protrusion and a cavity with an envelope complementary to the protrusion, the protrusion being arranged in the cover and the cavity in the frame, or rather the cavity being arranged in the cover and the protrusion in the frame, the axis of the protrusion or the cavity being perpendicular to the cover such that the protrusion can rotate with respect to the cavity in a direction that is perpendicular to the cover, wherein either the protrusion or part of the envelope of the cavity is made of a magnetic material, the other being made of a magnetic or ferromagnetic material such that the hinge can be disassembled by pulling the cover in the direction perpendicular to the surface thereof.

The disadvantages of the state of the art are overcome with this structure because the cover can be removed with a very simple gesture, it does not occupy space in the direction perpendicular to the wall, it has a very simple design since there are no moving parts or hinges and the incorrect handling thereof, such as forcing a movement away of the cover from the frame, does not cause stress in the hinge that could lead to its early deterioration or breakage.

Therefore, it is an assembly specially designed for indoors, that is to say, it guarantees the attachment of the cover to the frame just enough to keep them together and prevent dust from accumulating in the socket.

In the present description by envelope it is meant the material part which configures or defines the cavity.

For the magnetic material neodymium will be preferred, due to its long operating life characteristics.

It should be noted that the cover claimed herein has a structure and use similar to a peephole.

That is to say, it is as much a removable cover as a hinged cover, with the best performance of both. It may be fully removed or left in place, either open or closed.

The assembly according to the invention may incorporate any of the following optional characteristics, which may be combined between each other where technically possible.

In some embodiments, the cover and frame are circular.

The circular shape fits most socket housings, which are also circular. However, other contour shapes could also be conceived, which could be adapted to the particular shapes of the housing.

In some embodiments, the frame comprises coupling means to a socket outlet.

In this way, the assembly can be supplied apart from a socket outlet. On the one hand, it can be adapted to sockets that have already been installed, and in addition it does not involve modifying existing sockets. Therefore, it does not add references to a catalog beyond its own.

In some embodiments, the part of the envelope of the cavity made of magnetic material or ferromagnetic material is its bottom.

This is a preferred manner of arranging these materials because it is very simple and can be implemented with simple shapes such as cylinders or disks, which provide for the best and more durable behavior of the magnetic material. Obviously, it could also be envisaged that the magnetic or ferromagnetic material would be in the walls of the cavity, for example not to increase its depth, especially when reducing the thickness of the components as much as possible is desired.

In some embodiments, the magnetic or ferromagnetic material is a cylindrical part fastened to the bottom of the cavity.

This is a very simple shape, with low manufacturing costs and which provides good adhesion.

In some embodiments, the cylindrical part is fastened by being embedded in the supporting material either in the cover or in the frame, by being snapped on or by being fastened by means of an adhesive.

In some embodiments, the protrusion is part of a cylindrical part fastened to the cover or the frame by partial embedding, by being snapped on or by being fastened by means of an adhesive.

The magnetic parts can be fastened in any of these ways, always guaranteeing an optimal compromise between manufacturing costs, product life, adhesion capacity and aesthetics.

In some embodiments, the perimeter contours of the cover and the frame coincide.

The invention makes it possible to simplify the aesthetic of the assembly, the option of coinciding perimeters providing a better aesthetic quality.

In some embodiments, the assembly comprises both in the cover and the frame and at a point other than that corresponding to the protrusion or the cavity of the hinge, for example at a diametrically opposite point, removable attachment means between cover and frame intended to provide stability to the cover with respect to the frame in a closing configuration.

This way, the user is assisted in the correct positioning of the cover.

In some embodiments, the removable attachment means between cover and frame are provided by means of cooperation between shapes.

In some embodiments, the removable attachment means between cover and frame are provided by means of magnetic parts.

In some embodiments, the removable attachment means between cover and frame are provided by means of a cooperative combination of shapes and magnetic parts.

In some embodiments, the frame comprises a gasket in an inner rim.

The gasket prevents the passage of dust and can also contribute to the fastening and snap fit of the frame, when it is removable, into the socket outlet.

In some embodiments, part of the protrusion and part of the envelope of the cavity are both covered by two layers of plastic material with their surfaces exposed, provided with complementary ridges that provide stability in various positions, such that the rotation to open the cover can be done by sections, between which stable positions are defined.

This way, stability is guaranteed in several positions, there being no need to rotate the cover 180° to adopt a position of stability.

Finally, in some embodiments, the protrusion is cylindrical or its diameter decreases towards the free end, the recess having a complementary shape. In the latter case, it is preferred that they are conical.

Conicity, which may be zero, in which case the parts are cylindrical, or of a few degrees, in which case they will be conical, will be selected depending on the resistance sought when the cover needs to open outwards and not sideways.

The invention also relates to a socket outlet comprising a front cover, the front cover comprising an assembly according to any of the variants described above.

Preferably, the frame is an integral part of the front cover of the socket outlet.

### Brief description of the drawings

As a complement to the description and for the purpose of helping to make the characteristics of the invention more readily understandable, in accordance with a practical exemplary embodiment thereof, said description is accompanied by a series of figures constituting an integral part of the same, which, by way of illustration and not limitation, represent the following:

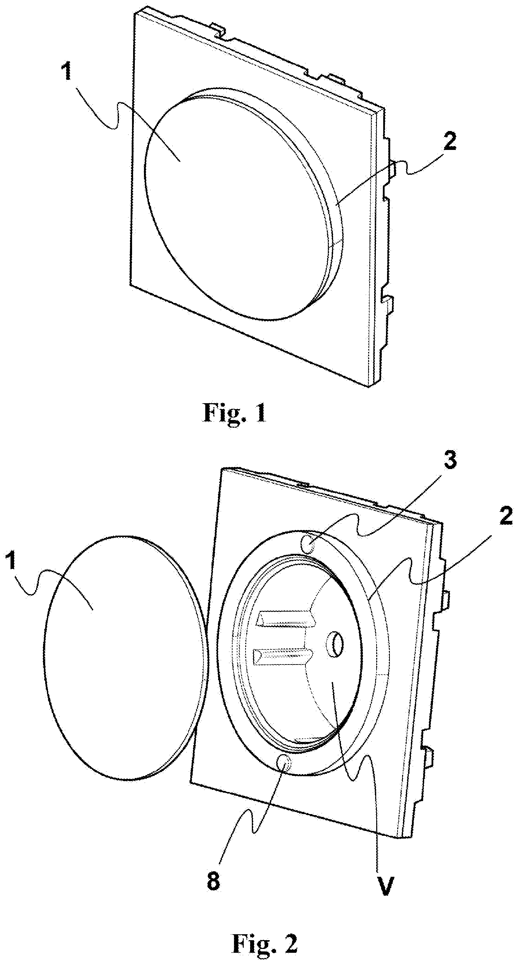

Figure 1 shows the front of a socket outlet provided with a cover and frame assembly, in the closed position.
Figure 2 shows the assembly wherein the cover and frame are separated.
Figures 3 and 4 show two exploded perspective views according to different points of view.
Figure 5 shows a front elevation view and the path of the cover when rotated.

### Description of an embodiment of the invention

As shown in the figures, the invention relates to a cover 1 and frame 2 assembly for a receptacle V for receiving a male plug.

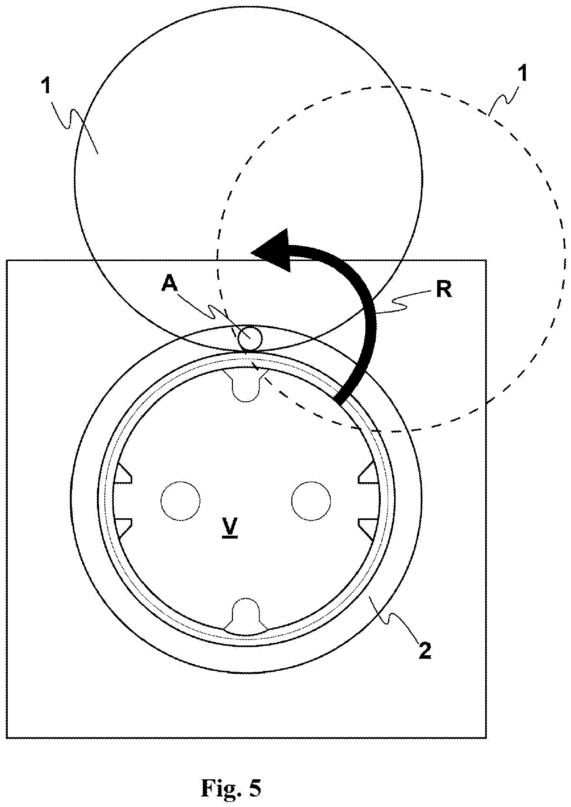

As shown in Figure 5, the cover 1 and the frame 2 are hinged by a hinge A, which consists of a protrusion 3 and a cavity 4 with an envelope complementary to the protrusion 3.

The figures show an embodiment wherein the cavity 4 is arranged in the cover 1 and the protrusion 3 in the frame.

However, it is also conceivable for the protrusion 3 to be arranged in the cover 1 and the cavity 4 in the frame 2.

In both cases according to the invention, the axis of the protrusion 3 or the cavity 4 is perpendicular to the cover 1 such that the protrusion 3 can rotate R with respect to the cavity 4 in a direction that is perpendicular to the cover 1, as if it were a peephole.

According to the present invention, either the protrusion 3 or part of the envelope of the cavity 4 is made of a magnetic material, the other being made of a magnetic or ferromagnetic material such that the hinge can be disassembled by pulling the cover 1 in the direction perpendicular to the surface thereof.

Therefore, a user who becomes confused and pulls the cover outwards can uncouple the magnetic parts and will keep the cover in his or her hand, which will avoid the exertion of force on the hinge that could deteriorate or break it. The cover of the invention has concealed the coupling and hinged parts, contrary to what happens with hinge-type covers. Therefore, the user who is unfamiliar with the movement of the cover opening could become confused and make it rotate along an axis parallel to the wall, but the reversible magnetic coupling provided by the invention will prevent the hinge from breaking. This does not occur with the assembly described in DE29606983U1 or US7977572 B1, as the hinge is composed of deformable plastic parts that will eventually deteriorate or even break due to incorrect handling.

It should be noted that the invention contemplates the option of both parts of the hinge being made of magnetic material, such as neodymium, or for one of them to be magnetic and the other ferromagnetic.

In the illustrated embodiment the cover 1 and the frame 2 are circular. Obviously any other shape may be suitable, such as a square shape.

The preferred use is on a socket outlet B, as shown in the figures.

A preferred form of implementation, due to its simplicity, is for the part of the envelope of the cavity 4 to be made of magnetic material or ferromagnetic material to be its bottom. These magnets or ferromagnetic materials are preferably provided as pellets 5, which may be easily engaged in the bottom of the cavity 4. Preferably both the cavity 4 and the pellet made of magnetic or ferromagnetic material are cylindrical. The pellet made of magnetic or ferromagnetic material may be fastened by being embedded in the supporting material of either the cover 1 or the frame 2, by being snapped on or by being fastened by means of an adhesive.

On the other hand, the protrusion 3 is part of a part 6, which is preferably cylindrical, fastened to the cover 1 or to the frame 2 by partial embedding, by being snapped on or by being fastened by means of an adhesive. That is, the protrusion 3 constitutes the axis of engagement and rotation in the cavity 4. It could also be a flat cylindrical pellet directly adhered to the inner surface of the cover.

In the illustrated embodiment, the perimeter contours of the cover 1 and the frame 2 coincide, which greatly simplifies the aesthetics of the assembly in addition to facilitating the placement of the fingers on the disk forming the cover to make it rotate according to the rotation movement R shown in Figure 5.

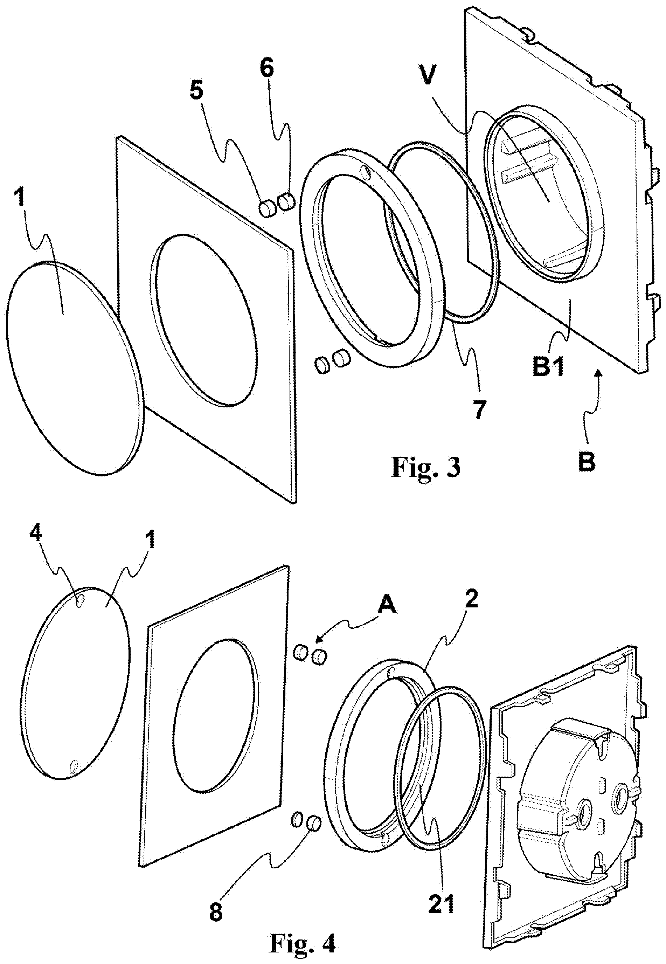

As shown in Figures 3 and 4, the assembly comprises both in the cover 1 and the frame 2 and at a point diametrically opposite the protrusion 3 or the cavity 4, removable attachment means 8 between the cover 1 and the frame 2 intended to provide stability to the cover 1 with respect to the frame 2 in a closing configuration.

These removable attachment means 8 between cover 1 and frame 2 are provided by means of cooperation between shapes, i.e. for example a slight bulge in one of the parts and a complementary convexity in the other.

Another option is that the removable attachment means 8 between cover 1 and frame 2 are by means of magnetic parts, as shown. Once again one part may be magnetic and the other ferromagnetic, or both magnetic. In this case the surfaces of the frame and the cover at the level of these attachment means are flat, and the magnets or magnetic parts must be sized to provide a minimum stabilizing force. A combination of cooperation of shapes and magnetic parts can also be conceived.

As shown in Figures 3 and 4, the frame 2 comprises in an inner rim 21 a gasket 7, both intended to prevent the passage of dust and to contribute to stabilizing the engagement of the frame in the projecting rim of the housing.

Part of the protrusion 3 and part of the envelope of the cavity 4 are both covered by layers of plastic material with their surfaces exposed, provided with complementary ridges (not shown) that provide stability in various positions, such that the rotation to open the cover 1 can be done by sections, between which stable positions are defined.

Finally, it should be noted that the complementary shapes of the protrusion and cavity can be implemented in many different ways, provided they allow the rotation and guarantee the desired resistance to separation. Therefore, cylindrical shapes can be conceived, which may be a preferred option if the length/depth of the protrusion and cavity are small, or it may be conceivable for the protrusion 3 to have a decreasing diameter in the direction from the socket outlet towards the free end of the protrusion 3, such that the inappropriate rotation of the cover causes less stress on the hinge.

In this text, the word "comprises" and its variants (such as "comprising", etc.) should not be interpreted in an exclusive manner, that is, they do not exclude the possibility that what it is described includes other elements, steps, etc.

On the other hand, the invention is not limited to the specific embodiments, which have been described, but also includes, for example, variants which may be carried out by a person skilled in the art (for example, in the choice of materials, sizes, components, configuration, etc.), within the scope of the claims.

## Claims

1. A cover (1) and frame (2) assembly for a housing (V), the cover (1) and the frame (2) being hinged by a hinge (A), the hinge (A) being composed of a protrusion (3) and a cavity (4) with a envelope complementary to the protrusion (3), the protrusion (3) being arranged in the cover (1) and the cavity (4) in the frame (2), or rather the cavity (4) being arranged in the cover (1) and the protrusion (3) in the frame, the axis of the protrusion (3) or the cavity (4) being perpendicular to the cover (1) such that the protrusion (3) can rotate (R) with respect to the cavity (4) in a direction that is perpendicular to the cover (1), **characterized in that** either the protrusion (3) or part of the envelope of the cavity (4) is made of a magnetic material, the other being made of a magnetic or ferromagnetic material such that the hinge can be disassembled by pulling the cover (1) in the direction perpendicular to the surface thereof.

2. The assembly according to claim 1, wherein the cover (1) and the frame (2) are circular.

3. The assembly according to any of the preceding claims, wherein the frame (2) comprises coupling means to a socket outlet (B).

4. The assembly according to any of the preceding claims, wherein the part of the envelope of the cavity (4) made of magnetic material or of ferromagnetic material is its bottom.

5. The assembly according to claim 4, wherein the magnetic material or ferromagnetic material is a cylindrical part (5) fastened to the bottom of the cavity (4).

6. The assembly according to claim 5, wherein the cylindrical part (5) is fastened by being embedded in the supporting material, either in the cover (1) or in the frame (2), by being snapped on or by being fastened by means of an adhesive.

7. The assembly according to any of the preceding claims, wherein the protrusion (3) is part of a cylindrical part (6) fastened to the cover (1) or to the frame (2), by partial embedding, by being snapped on or by being fastened by means of an adhesive.

8. The assembly according to any of the preceding claims, wherein the perimeter contours of the cover (1) and the frame (2) coincide.

9. The assembly according to any of the preceding claims, comprising in both the cover (1) and the frame (2) and at a point diametrically opposite the protrusion (3) or the cavity (4) removable attachment means (8) between the cover (1) and the frame (2) intended to provide stability to the cover (1) with respect to the frame (2) in a closing configuration.

10. The assembly according to claim 9, wherein the removable attachment means (8) between the cover (1) and the frame (2) are provided by means of cooperation between shapes.

11. The assembly according to claim 9 or 10, wherein the removable attachment means (8) between the cover (1) and the frame (2) are provided by means of magnetic parts.

12. The assembly according to any of the preceding claims, wherein the frame (2) comprises a gasket (7) in an inner rim (21).

13. The assembly according to any of the preceding claims, wherein part of the protrusion (3) and part of the envelope of the cavity (4) are both covered by layers of plastic material with their surfaces exposed, provided with complementary ridges that provide stability in various positions, such that the rotation to open the cover (1) can be done by sections, between which stable positions are defined.

14. The assembly according to any of the preceding claims, wherein the protrusion (3) is cylindrical or its diameter decreases toward the free end, the recess having a complementary shape.

15. A socket outlet (B) comprising a front cover (B1), the front cover (B1) comprising an assembly according to any of claims 1 to 14.

16. The socket outlet (B) according to claim 15, wherein the frame (2) is an integral part of the front cover (B1) of the socket outlet (B).
